Europäisches Patentamt

European Patent Office

Office européen des brevets

(19)

(11) Veröffentlichungsnummer: **0 241 856**

**A1**

## (12) EUROPÄISCHE PATENTANMELDUNG

(21) Anmeldenummer: 87105225.4

(22) Anmeldetag: 08.04.87

(51) Int. Cl.⁴: **A01F 29/06** , **A01F 29/10**

(30) Priorität: 15.04.86 DE 3612660

(43) Veröffentlichungstag der Anmeldung:
21.10.87 Patentblatt 87/43

(84) Benannte Vertragsstaaten:
AT BE FR GB IT NL

(71) Anmelder: Streicher, Josef
Blumenstrasse 5
D-8029 Sauerlach-Lochhofen(DE)

(72) Erfinder: Streicher, Josef
Blumenstrasse 5
D-8029 Sauerlach-Lochhofen(DE)

(74) Vertreter: Lamprecht, Helmut, Dipl.-Ing.
Corneliusstrasse 42
D-8000 München 5(DE)

(54) Zuführeinrichtung eines Häckslers.

(57) Bei einm Häcksler ( 20) mit einer feststehenden Gegenschneide (2) und wenigstens einem zur Erzielung eines ziehenden Schnittes unter einem Schnittwinkel zur Gegenschneide angestellten Häckselmesser (1), sowie mit unmittelbar vor der Gegenschneide (2) und etwa parallel zu dieser gelagerten Einzugsorganen, die mindestens eine Einziehwalze (4) umfassen, ist mindestens eine Einziehwalze (4) mit Querfördermitteln (8) versehen, deren axial zu der Einziehwalze (4) verlaufende Förderrichtung (A) auf den Bereich (B) der Gegenschneide (2) gerichtet ist, an dem der Schnitt beginnt.

Fig. 2

EP 0 241 856 A1

## Zuführeinrichtung eines Häckslers.

Die Erfindung betrifft eine Zuführeinrichtung eines Häckslers mit einer feststehenden Gegenschneide und wenigstens einem zur Erzielung eines an einem gegebenen Bereich der Gegenschneide beginnenden, ziehenden Schnittes unter einem Schnittwinkel zur Gegenschneide angestellten Häckselmesser, sowie mit unmittelbar vor der Gegenschneide und etwa parallel zu dieser gelagerten, aus wenigstens einer Einziehwalze bestehenden Einzugsorganen.

Eine derartige Zuführeinrichtung ist aus der DE-A 34 41 265 bekannt. Hierbei soll ein guter, ziehender Schnitt durch seitliche Führung des Häckselgutes an auf einem Abstreifer und teilweise dem Gegenmesser angeordneten Rippen ermöglicht werden. Eine Verschiebung des noch eine gewisse Elastizität besitzenden Häckselgutes, insbesondere bei größeren Schnittwinkeln zwischen den Messern und/oder stumpfen Messern, und damit eine seitliche Gutanhäufung an der Gegenschneide in Richtung auf das Schnittende läßt sich damit kaum vermeiden, weil das Gutpolster allein unter seinem Eigengewicht nicht in eine wirksame Berührung mit den Rillen zwischen den Rippen kommt. Die Zerkleinerung der deshalb in der Regel an dem Schnittende der Gegenschneide angehäuften Schnittgutschicht erfolgt durch die hier ohnehin einen kleineren Schnittwinkel aufweisenden Häckselmesser dabei in unerwünschter, die Häckselqualität vermindernder Weise durch einen mehr hackenden als schneidenden Schnitt.

Der Erfindung liegt die Aufgabe zugrunde, die vorstehenden Mängel zu beseitigen und eine Zuführeinrichtung der oben genannten Art zu schaffen, die dem seitlichen Abdrängen des Häckselgutes und somit Gutanhäufungen im seitlichen Bereich des Schnittendes sicher entgegenwirkt und damit ein Hacken und einen dadurch bedingten, meist zudem ungleichmäßigen Verschleiß der Schneiden und Gegenschneiden vermindert.

Diese Aufgabe wird erfindungsgemäß dadurch gelöst, daß wenigstens eine Einziehwalze Querfördermittel aufweist, deren axial zu der Einziehwalze verlaufende Förderrichtung auf den Bereich der Gegenschneide gerichtet ist, an dem der Schnitt beginnt.

Durch die erfindungsgemäße Gestaltung der Einziehwalze wird das Häckselgut in vorteilhafter Weise sowohl in Richtung auf die Häckslerschneiden als auch quer dazu gefördert, so daß auch der Randbereich der Querschneide, an dem der Schnitt beginnt, mit einem Gutpolster belegt ist und sich somit eine gegenüber herkömmlichen Einziehwalzen gleichmäßigere Verteilung des Häckselgutes über die Breite des Einzugskanals ergibt. Durch die Förderrichtung entgegen der Richtung der durch den ziehenden Schnitt verursachten Abdrängwirkung auf das Gutpolster wird ein Verschieben des Häckselgutes in Verbindung mit der starken Vorpressung der federbelasteten Einziehwalze zuverlässig vermieden und Schlagbelastung und Verschleiß erheblich reduziert. In vorteilhafter Weise werden auch schräg-und querliegende Pflanzenteile durch die erfindungsgemäße Einziehwalze erfaßt und somit die Zuführwirkung und der Durchsatz erhöht.

In einer bevorzugten Ausführung mit der Anordnung der Einziehwalzen-Umlaufbahn nächstmöglich an der Messerumlaufbahn und mit schlanken Mitnehmerzacken, deren Höhe etwa der maximalen Gutpolsterdicke entspricht, dringen die Mitnehmerzacken in das Gutpolster ein, pressen und halten es während des Schnittes fest, so daß größere, quer-, schräg-und längsliegende Planzenteile, wie Lieschen des Maiskolbens, nicht mehr ungeschnitten und unkontrolliert in den Häcksler eingezogen werden. Hierzu ist bei zwei übereinander angeordneten, gegenläufigen Einziehwalzen der Durchmesser der oberen Einziehwalze relativ klein gewählt, so daß diese zum einen im sogenannten Mundstück des Häckslers Platz findet und sich zum anderen zusammen mit zur Gegenschneide führenden Führungsmitteln, wie etwa einem Bodenblech, ein ausgeprägter Fördertrog ergibt, wodurch die Haltewirkung beim Schnitt und die Querförderwirkung gesteigert wird.

Die Erfindung und deren Wirkungsweise wird nachstehend anhand eines Ausführungsbeispiels näher erläutert und beschrieben.

Es zeigt:

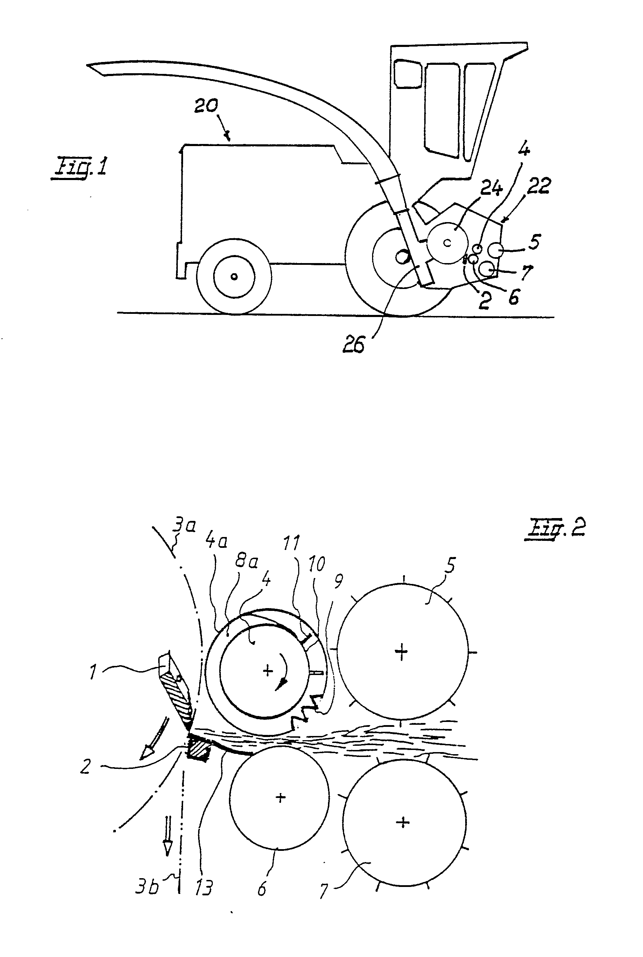

Fig. 1 eine schematische Darstellung eines Feldhäckslers,

Fig. 2 die Zuführeinrichtung der Häckslers mit einer mit Querfördermitteln und Mitnehmern versehenen Einziehwalze in Seitenansicht,

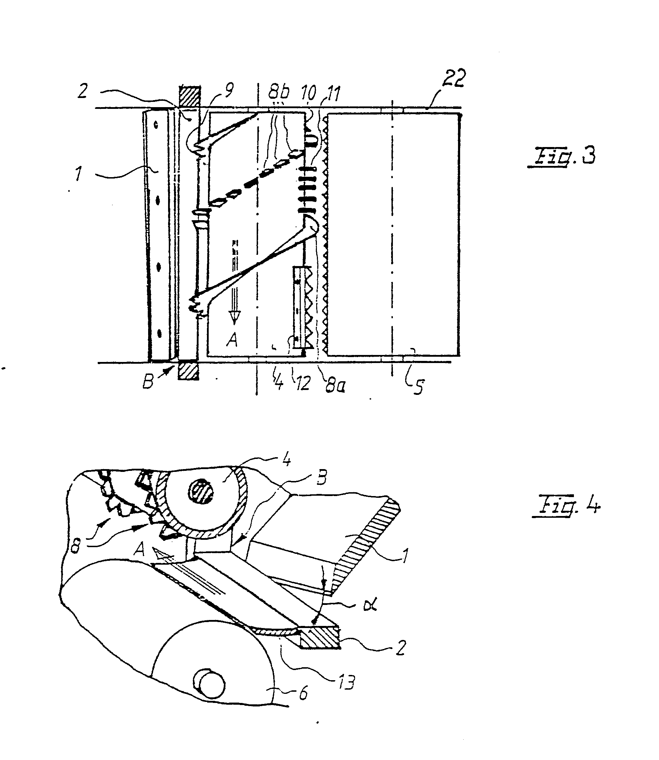

Fig. 3 eine Draufsicht zu Fig. 2 mit einigen Varianten der Querfördermittel und der Mitnehmer,

Fig. 4 eine perspektivische Darstellung der Schneiden.

Ein insgesamt mit 20 bezeichneter, selbstfahrender Feldhäcksler ist mit einer Zuführvorrichtung 22 für das Häckselgut versehen, die zwei Paare von jeweils gegenläufigen Einziehwalzen 5, 7 und 4, 6 umfaßt und die das Häckselgut dem Schneidbereich zuführt, in dem Häckslermesser 1 auf einer rotierenden Trommel 24 mit einer feststehenden Gegenschneide 2 zusammenwirken. Das zerkleinerte Häckselgut wird durch ein Fördergebläse 26 und einen Förderkrümmer 28 abgeführt.

Beim gezeigten Beispiel, einem Trommelhäcksler, bewegen sich die Häckselmesser 1 auf einer zylindrischen Umlaufbahn 3a (Fig. 2). Die Erfindung ist aber auch auf Scheibenradhäcksler anwendbar, bei welchen sich die Häckslermesser in einer Umlaufebene bewegen, die in Fig. 2 ebenfalls dargestellt und mit 3b bezeichnet ist.

Die Häckslermesser 1 sind unter einem in Fig. 4 dargestellten Schnittwinkel $\alpha$ zur Gegenschneide 2 angestellt, so daß -wie in Fig. 4 gezeigt - der Schnitt am in Fig. 4 hinteren Ende B der Gegenschneide 2 beginnt, die hier, wie bei Scheibenradhäckslern üblich, als Schneidrahmen mit hochgezogenen Enden ausgebildet ist und am vorderen Ende der Gegenschneide 2 endet. Vor dem Häcksler sind Einzugsorgane, wie z.B. vier Einziehwalzen 4, 5, 6 und 7 angeordnet. Die Einzugsorgane können auch teilweise durch nicht dargestellte Förderbänder ersetzt sein. Eine der Einziehwalzen, vorzugsweise die unmittelbar vor der Messrumlaufbahn 3a bzw. 3b gelegene obere Einziehwalze 4, weist Querfördermittel 8 auf, die das Häckselgut in axialer Richtung der Zuführwalze fördern und zwar in der Förderrichtung A (Fig. 4), die auf das Ende B der Gegenschneide 2 gerichtet ist, an dem das schräg angestellte, rotierende Häckselmesser 1 zuerst vorbeizieht und damit den Schnitt beginnt.

Dieses Querfördermittel 8 besteht vorzugsweise aus einem die Einziehwalze 4 umgebenden Förderschneckengang 8a, der zur Sicherstellung der Längsförderung in Richtung auf den Schneidenbereich des Häckslers an seinen Umfangskanten mit Mitnehmerzacken 8 versehen sein kann.

Die Ausbildung des Förderschneckenganges 8a richtet sich nach der benötigten Förderrichtung, dem gewünschten Maß der Querförderung und der Dicke des Polsters aus Häckselgut, das eingezogen werden soll. Durch Änderung der Steigung und/oder der Gangzahl der als Querfördermittel 8 dienenden Förderschnecke kann das Maß der Querförderung dem jeweiligen Häcksler und dessen Messeranstellwinkel $\alpha$ angepaßt werden.

Als weitere Mittel zur Längsförderung können am Mantel 10 der Einziehwalze 4 zwischen dem Förderschneckengang 8a und teils über diesen hinausragend, Mitnehmer in Form an sich bekannter Zackenleisten 12 oder Mitnehmerstifte 11 vorgesehen sein.

Der Förderschneckengang 8a kann ersetzt werden durch schraubenlinienförmig am Mantel 10 der Einziehwalze 4 befestigte Mitnehmerlappen 8b, die sowohl längs als auch quer fördern.

Um die Haltewirkung der Einziehwalze 4 beim Schnitt zu erhöhen, ist diese möglichst nahe an die Umlaufbahn 3a bzw. 3b der Messer 1 herangerückt.

Zur Erhöhung der Querförderwirkung der oberen Zuführwalze 4 bietet sich an, ein zwischen der Gegenschneide 2 und der vorgelagerten sogenannten Glattwalze 6 angeordnetes Bodenblech 13 trog-oder muldenförmig auszubilden. In dieser bevorzugten Ausgestaltung ist die Einziehwalze 4 durch die Anordnung nächstmöglich und unmittelbar an der Messerumlaufbahn teilweise im Mundstück des Häckslers beweglich gelagert, so daß sich eine dem seitlichen Abdrängen entgegengerichtete Haltewirkung der Förderschneckengänge 8a ergibt.

Die Erfindung erweist sich insbesondere bei Scheibenradhäckslern als vorteilhaft, deren Gegenschneide als sogenannter Schneidrahmen mit an den Enden hochgezogenen Ecken ausgeführt ist, da die Ecke, an der der Schnitt endet, besonders hohem Verschleiß ausgesetzt ist. Durch diesen punktuellen Verschleiß konnte bisher die Gegenschneide aus hochwertigem Stahl nur unvollständig genutzt werden, während sich bei der erfindungsgemäßen Ausgestaltung eine nahezu gleichmäßige Abnutzung ergibt, die das Nachschleifen erleichtert und eine vielfach längere Nutzungsdauer der Gegenschneiden gestattet. Zudem verringert sich das Geräuschniveau bei Häckslern durch den nahezu gleichmäßigen, nicht mehr hackenden Schnitt.

Die Erfindung läßt sich auf alle Häckselaggregate mit einem Anstellwinkel zwischen Messer und Gegenschneide anwenden, sowohl auf Scheibenrad-als auch auf Trommelhäcksler und bei letzteren auf auf Messer, die in Art einer Pfeilverzahnung angestellt sind. Hier beginnt der Schnitt in der Mitte und wandert nach außen. Folglich muß hier die Einziehwalze von beiden Außenseiten her in Richtung auf die Stelle des Schnittbeginns, nämlich die Mitte der Gegenschneide, fördern, indem zwei entgegengesetzt ansteigende, zur Mitte hin fördernde Einziehwalzen vorgesehen sind.

## Ansprüche

1. Zuführeinrichtung (22) eines Häckslers (20) mit einer feststehenden Gegenschneide (2) und wenigstens einem zur Erzielung eines an einem gegebenen Bereich (B) der Gegenschneide (2) beginnenden, ziehenden Schnittes unter einem Schnittwinkel zur Gegenschneide (2) angestellten Häckselmesser (1), sowie mit unmittelbar vor der Gegenschneide (2) und etwa parallel zu dieser gelagerten, aus wenigstens einer Einziehwalze (4) bestehenden Einzugsorganen, dadurch gekennzeichnet, daß wenigstens eine Einziehwalze (4) Querfördermittel (8) aufweist, deren axial zu der Einziehwalze (4) verlaufende Förderrichtung (A) auf den Bereich (B) der Gegenschneide (2) gerichtet ist, an dem der Schnitt beginnt.

2. Zuführeinrichtung nach Anspruch 1, dadurch gekennzeichnet, daß die Querfördermittel (8) aus wenigstens einem um die Einziehwalze (4) geführten Förderschneckengang (8a) gebildet sind.

3. Zuführeinrichtung nach Anspruch 1, dadurch gekennzeichnet, daß die Querfördermittel (8) aufweisende Einziehwalze (4) zugleich mit Mitteln (9, 11, 12) zur Längsförderung in ihrer Umlaufrichtung versehen ist.

4. Zuführeinrichtung nach den Ansprüchen 2 und 3, dadurch gekennzeichnet, daß der Förderschneckengang (8a) an seiner Umfangskante Mitnehmerzacken (9) aufweist.

5. Zuführeinrichtung nach den Ansprüchen 2 und 3, dadurch gekennzeichnet, daß am Mantel (10) der Einziehwalze (4) zwischen dem Förderschneckengang (8a) Mitnehmer (11, 12) angeordnet sind.

6. Zuführeinrichtung nach Anspruch 5, dadurch gekennzeichnet, daß die Mitnehmer als Stifte (11) ausgebildet sind.

7. Zuführeinrichtung nach Anspruch 5, dadurch gekennzeichnet, daß die Mitnehmer als Zackenleisten (12) ausgebildet sind.

8. Zuführeinrichtung nach Anspruch 1, dadurch gekennzeichnet, daß die Querfördermittel (8) aus schraubenlinienförmig am Mantel (10) befestigten Mitnehmerlappen (8b) bestehen.

9. Zuführeinrichtung nach Anspruch 1, dadurch gekennzeichnet, daß ein zur Gegenschneide (2) führendes Führungselement (13) die Einziehwalze trogförmig umfassend, ausgebildet ist.

10. Zuführeinrichtung nach Anspruch 9, dadurch gekennzeichnet, daß das Führungselement ein Bodenblech (13) ist.

11. Zuführeinrichtung nach Anspruch 9, dadurch gekennzeichnet, daß das Führungselement ein Einziehband ist.

12. Zuführeinrichtung nach Anspruch 4, dadurch gekennzeichnet, daß die den Förderschneckengang (8a) aufweisende Mitnehmerwalze (4) nächstmöglich an der Umlaufbahn des Häckselmessers (1) angeordnet ist und die Mitnehmerzacken (9) schlank ausgebildet sind und in ihrer Höhe der maximalen Dicke des zu verarbeitenden Polsters des Häckselgutes angepaßt sind.

_Fig._ 1

_Fig._ 2

_Fig._3

_Fig._4

Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 507 317  (MINISTERUL INDUSTRIEI CONSTRUCTIILOR DE MASINI)<br>* Figuren 1-3 * | 1 | A 01 F   29/06<br>A 01 F   29/10 |
| A | US-A-3 972 484  (K.P. RYAN)<br>* Figuren 2, 3 * | 1 | |
| A | GB-A-1 570 781  (WESTERN MACHINERY & EQUIPMENT CO. LTD.)<br>* Figuren 1, 2, 4 * | 1 | |
| D,A | DE-A-3 441 265  (VEB KOMBINAT FORTSCHRITT LANDMASCHINEN)<br>* Figur 1 * | 1 | |

-----

RECHERCHIERTE SACHGEBIETE (Int. Cl.4)

A 01 F   29/00

Der vorliegende Recherchenbericht wurde für alle Patentansprüche erstellt.

| Recherchenort | Abschlußdatum der Recherche | Prüfer |
|---|---|---|
| BERLIN | 09-07-1987 | SAMWEL P.N. |